# EUROPEAN PATENT APPLICATION

(11) **EP 2 963 459 A1**
(43) Date of publication of application: **06.01.2016**
(21) Application number: 14757146.7
(22) Date of filing: 28.02.2014
(51) Int. Cl.: G02B 1/10, B05C 9/04, B05C 11/08, B05D 1/40, B05D 7/00, G02C 7/02

(54) **METHOD FOR MANUFACTURING SPECTACLE LENS AND COATING DEVICE FOR COATING LIQUID FOR BASE MATERIAL OF SPECTACLE LENS**

(30) Priority: 28.02.2013 JP 2013039142
(71) Applicant: HOYA Corporation, Tokyo 161-8525 (JP)
(72) Inventor: NAKAMURA,Kenji, Tokyo 161-8525 (JP); SHIMADA,Akira, Tokyo 161-8525 (JP)
(74) Representative: Adam, Holger
(86) International application number: PCT/JP2014/055108
(87) International publication number: WO 2014/133145

(57) **Abstract**

A coating solution (3) is injected from nozzles (2a, 2b) in the horizontal direction to coat, with the coating solution (3), lens surfaces (1a, 1b) of a spectacle lens substrate (1) so arranged as to orient an optical axis (C) in the horizontal direction (step S2a). The spectacle lens substrate (1) is rotated at a first rotational speed about the optical axis (C) serving as the rotation center, and the coating solution (3) is spread on the lens surfaces by the centrifugal force (step S2b). The spectacle lens substrate (1) is rotated at a second rotational speed higher than the first rotational speed to blow away an excess (3a) of the coating solution (3) from the spectacle lens substrate (1) by the centrifugal force (step S3). Highly uniform films can be formed on the lens surfaces of the spectacle lens.

## Description

### Technical Field

The present invention relates to a method for manufacturing a spectacle lens, in which the two surfaces of a spectacle lens substrate are coated with a coating solution, and a coating solution coating apparatus for a spectacle lens substrate.

### Background Art

As a method of forming a film on a substrate (to be simply referred to as a spectacle lens substrate hereinafter) for manufacturing a spectacle lens, there are a dip coat method, a spray coat method, and a spin coat method. Of these methods, the spin coat method is a method capable of implementing the uniformity of the film thickness of a hard coat film.

A coating solution coating method of coating a spectacle lens substrate with a coating solution by the spin coat method is disclosed in, for example, patent literature 1.

According to the coating solution coating method disclosed in patent literature 1, first, a spectacle lens substrate is rotated. At this time, the spectacle lens rotates in a state in which its lens surfaces are oriented up and down. Then, the lens surfaces of the rotating spectacle lens substrate are coated with a coating solution from a discharge nozzle. Patent literature 1 discloses a method of applying the coating solution from only above the spectacle lens substrate, and a method of applying the coating solution from both above and below the spectacle lens substrate without stopping the spectacle lens substrate.

After coated with the coating solution, the spectacle lens substrate is rotated at high speed.

In order to prevent generation of an interference fringe on a spectacle lens substrate, the uniformity of the film thickness on the lens surface is sometimes required at high accuracy. However, it is difficult for the method disclosed in patent literature 1 to form a satisfactorily uniform film on the lens surface of a spectacle lens substrate.

### Related Art Literature

### Patent Literature

Patent Literature 1: Japanese Patent Laid-Open No. 2007-21355

### Disclosure of Invention

### Problem to be Solved by the Invention

The present inventor has been made to solve the above problems, and has as its first object to provide a method for manufacturing a spectacle lens, in which the uniformity of the thickness of a film formed on the lens surface of a spectacle lens can be improved.

It is the second object of the present invention to provide a coating solution coating apparatus capable of easily executing the above-described method for manufacturing a spectacle lens. Means of Solution to the Problem

To achieve this object, according to the present invention, there is provided a method for manufacturing a spectacle lens, comprising the steps of coating, with a coating solution, a lens surface of a spectacle lens substrate arranged to orient an optical axis in a horizontal direction by injecting the coating solution from a nozzle in the horizontal direction, spreading the coating solution on the lens surface by a centrifugal force by rotating the spectacle lens substrate at a first rotational speed about the optical axis serving as a rotation center, and blowing away an excess of the coating solution from the spectacle lens substrate by a centrifugal force by rotating the spectacle lens substrate, on which the coating solution is spread, at a second rotational speed higher than the first rotational speed.

According to the present invention, there is provided a coating solution coating apparatus for a spectacle lens substrate, comprising a rotating unit that rotates a spectacle lens substrate about an optical axis serving as a rotation center in a state in which the spectacle lens substrate is held to orient the optical axis in a horizontal direction, and a first nozzle that faces a first lens surface of the spectacle lens substrate and injects a coating solution in the horizontal direction toward the first lens surface.

### Effect of the Invention

The method for manufacturing a spectacle lens according to the present invention reduces the influence of gravity acting on a spectacle lens substrate having a curved surface. A highly uniform film can be formed on the lens surface of a spectacle lens.

The coating solution coating apparatus for a spectacle lens substrate according to the present invention can individually control rotation of a spectacle lens substrate and coating of a lens surface with a coating solution. Therefore, various coating solution coating methods can be easily executed.

### Brief Description of Drawings

Fig. 1 is a flowchart for explaining a method for manufacturing a spectacle lens according to the first embodiment of the present invention;
Figs. 2A to 2D are sectional views for explaining the method for manufacturing a spectacle lens according to the first embodiment, in which Fig. 2A shows a state in which a lens positioning step is executed, Fig. 2B shows a state in which a lens surface is coated with a coating solution in a coating step, Fig. 2C shows a state in which the coating solution is spread in a spreading step, and Fig. 2D shows a state in which a high-speed rotation step is executed;
Fig. 3 is a sectional view showing the arrangement of a coating solution coating apparatus according to the present invention;
Fig. 4 is a flowchart for explaining a method for manufacturing a spectacle lens according to the second embodiment of the present invention;

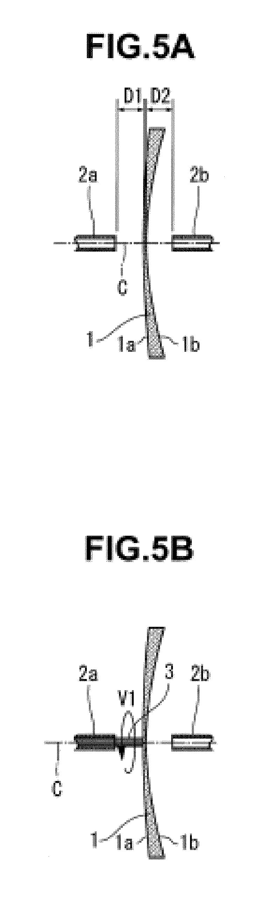

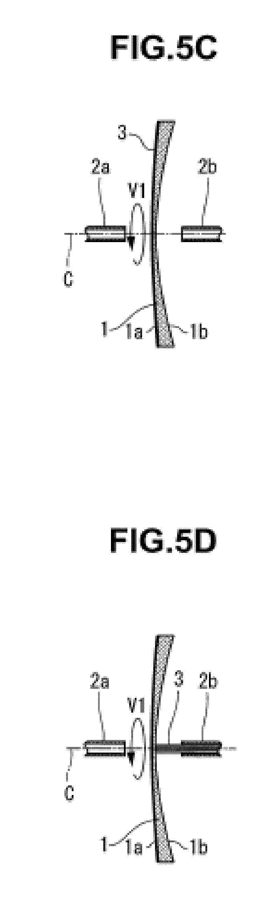

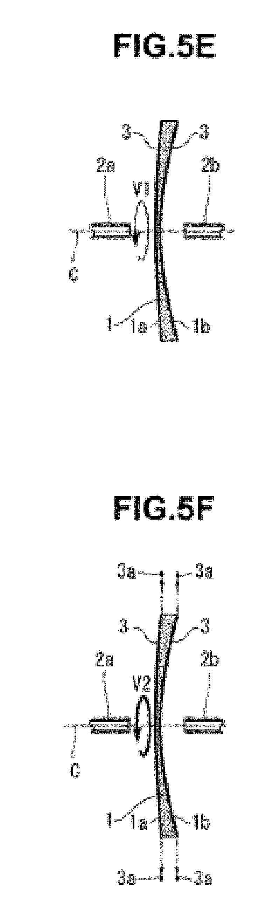

Figs. 5A to 5F are sectional views for explaining the method for manufacturing a spectacle lens according to the second embodiment, in which Fig. 5A shows a state in which a lens positioning step is executed, Fig. 5B shows a state in which the first lens surface is coated with a coating solution in a first coating step, Fig. 5C shows a state in which the coating solution is spread in a first spreading step, Fig. 5D shows a state in which the second lens surface is coated with the coating solution in a second coating step, Fig. 5E shows a state in which the coating solution is spread in a second spreading step, and Fig. 5F shows a state in which a high-speed rotation step is executed;
Fig. 6 is a graph showing a film thickness distribution on one surface of a spectacle lens;
Fig. 7 is a graph showing film thickness distributions on the two surfaces of a spectacle lens when films were formed using the method according to the first embodiment; and
Fig. 8 is a graph showing film thickness distributions on the two surfaces of a spectacle lens when films were formed using the method disclosed in patent literature 1.

### Best Mode for Carrying Out the Invention

### (First Embodiment)

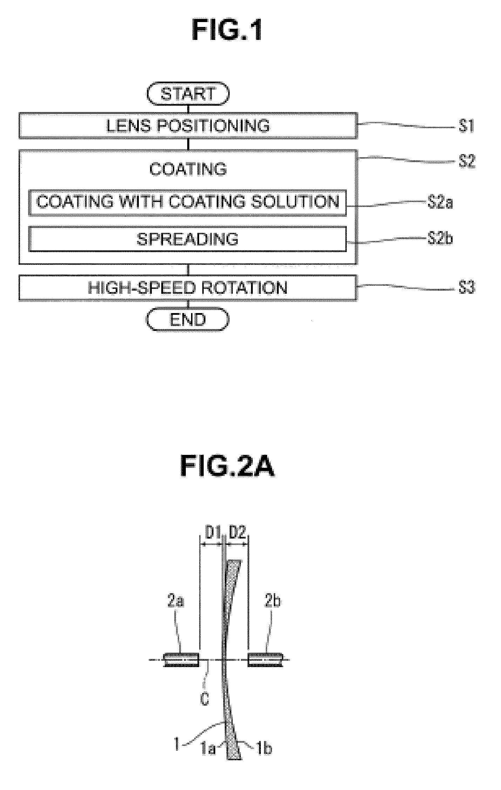

A method for manufacturing a spectacle lens and a coating solution coating apparatus for a spectacle lens substrate according to the first embodiment of the present invention will now be described in detail with reference to Figs. 1 to 3.

The method for manufacturing a spectacle lens according to this embodiment is executed as shown in the flowchart of Fig. 1. More specifically, lens positioning step S1, coating step S2, and high-speed rotation step S3 are executed in the order named. In coating step S2, coating solution coating step S2a and coating solution spreading step S2b are executed in the order named, details of which will be described later.

In lens positioning step S1, a spectacle lens substrate 1 is positioned between paired coating solution coating nozzles 2a and 2b, as shown in Fig. 2A. The spectacle lens substrate 1 is formed into a disc shape, and is arranged so that an optical axis C of lens surfaces 1a and 1b is oriented in the horizontal direction. The spectacle lens substrate 1 shown in Fig. 2A is a negative lens having the first lens surface 1a formed from a convex surface, and the second lens surface 1b having a concave surface. Note that the method for manufacturing a spectacle lens according to this embodiment is applicable not only to a negative lens but also to a positive lens.

The coating solution coating nozzle 2a will be called the first nozzle, and the coating solution coating nozzle 2b will be called the second nozzle. The first nozzle 2a and the second nozzle 2b are connected to a coating solution supply apparatus (not shown), and inject a coating solution 3 in the horizontal direction at a predetermined pressure in a predetermined coating amount. The type of coating solution to be used is arbitrary. That is, a thermoplastic coating solution, a thermosetting coating solution, an ultraviolet curing coating solution, and the like are available.

The first nozzle 2a and the second nozzle 2b are arranged at positions where they face the center of the spectacle lens substrate 1, that is, are arranged on (the extended line of) the optical axis C of the spectacle lens substrate 1. The first nozzle 2a faces the first lens surface 1a of the spectacle lens substrate 1, and the second nozzle 2b faces the second lens surface 1b of the spectacle lens substrate 1. The spectacle lens substrate 1 is arranged between the first nozzle 2a and the second nozzle 2b so that an interval D1 between the first nozzle 2a and the first lens surface 1a, and an interval D2 between the second nozzle 2b and the second lens surface 1b have predetermined values. The intervals D1 and D2 can be, e.g., the same distance.

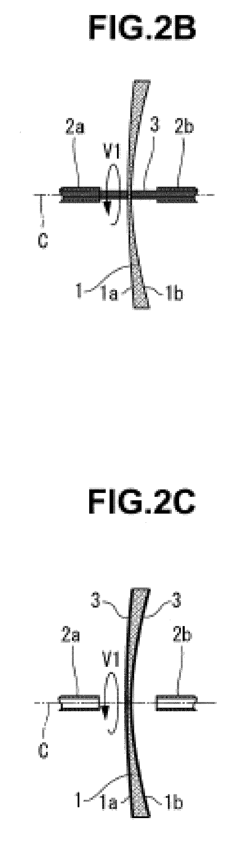

After the end of lens positioning step S1, coating solution coating step S2a of coating step S2 is executed. In coating solution coating step S2a, as shown in Fig. 2B, the coating solution 3 is injected in the horizontal direction at a predetermined pressure simultaneously from the first nozzle 2a and the second nozzle 2b. At this time, the spectacle lens substrate 1 is rotated at a predetermined rotational speed V0 about the optical axis C serving as the rotation center. By spraying the coating solution 3 in a state in which the spectacle lens substrate 1 rotates, the coating solution 3 is prevented from running down in the vertical direction, and the coating solution 3 can be adhered to the first lens surface 1a and the second lens surface 1b.

Although the number of revolutions of the spectacle lens substrate 1 at which the rotational speed V0 is obtained is 200 to 1,000 rpm, the number of revolutions of the spectacle lens substrate 1 optimum for executing coating solution coating step S2a is 200 to 700 rpm.

The injection of the coating solution 3 is performed for, e.g., 1 to 10 sec. Although not shown, a primer solution for forming a primer film, a coating solution for forming an interference fringe reduction film, or the like is usable as the coating solution 3.

Thereafter, spreading step S2b of coating step S2 is executed. Note that spreading step S2b can be executed while injecting the coating solution 3 from the first nozzle 2a and the second nozzle 2b.

As shown in Fig. 2C, spreading step S2b is performed while the spectacle lens substrate 1 is rotated at a first rotational speed V1 for a predetermined spreading time. The first rotational speed V1 is set to be a rotational speed at which the coating solution 3 adhered to the first lens surface 1a and the second lens surface 1b runs up to the peripheral portion of the spectacle lens substrate 1 by the centrifugal force. The number of revolutions of the spectacle lens substrate 1 at which the first rotational speed V1 is obtained is 200 to 1,000 rpm, and the number of revolutions of the spectacle lens substrate 1 optimum for executing spreading step S2b is 200 to 700 rpm. The first rotational speed V1 may be equal to the rotational speed V0 in coating solution coating step S2a, but is higher than the rotational speed V0 in general. The spreading time is 0 to 30 sec.

After the coating solution 3 is spread on the entire first and second lens surfaces 1a and 1b, high-speed rotation step S3 is executed.

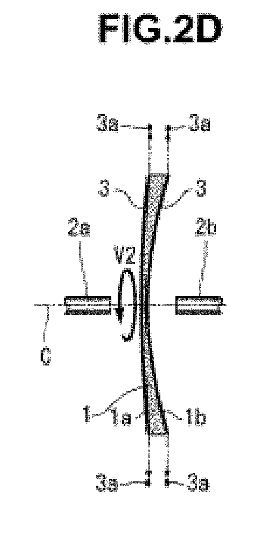

In high-speed rotation step S3, as shown in Fig. 2D, the spectacle lens substrate 1 is rotated at a predetermined second rotational speed V2. The second rotational speed V2 is set to be higher than the first rotational speed V1 in spreading step S2b, and be a rotational speed at which an excess 3a of the coating solution 3 applied to the first lens surface 1a and the second lens surface 1b is blown away from the spectacle lens substrate 1 by the centrifugal force. The number of revolutions of the spectacle lens substrate 1 at which the second rotational speed V2 is obtained is, e.g., about 1,000 to 3,000 rpm. Note that the second rotational speed V2 is not limited to 1,000 to 3,000 rpm, and can be, e.g., about 6,000 rpm when a coating solution coating apparatus capable of high-speed rotation is used.

High-speed rotation step S3 is executed for 5 to 30 sec. By executing high-speed rotation step S3, the excess 3a of the coating solution 3 applied to the first lens surface 1a and the second lens surface 1b is blown away and removed by the centrifugal force.

After the end of high-speed rotation step S3, the rotation of the spectacle lens substrate 1 is stopped, and the spectacle lens substrate 1 is fed to the next step, for example, a drying step.

In the method according to this embodiment, the coating solution 3 is spread on the lens surface of the spectacle lens substrate 1 while rotating the spectacle lens substrate 1 in a state in which it stands straight. This reduces the influence of gravity acting on the coating solution 3 on each lens surface of the spectacle lens substrate 1. Therefore, a film with high uniformity can be formed on each lens surface.

According to the above-described method, conditions when the first lens surface 1a of the spectacle lens substrate 1 is coated with the coating solution 3, and conditions when the second lens surface 1b is coated with the coating solution 3 become equal to each other, including the influence of gravity. Since the first lens surface 1a and the second lens surface 1b can be uniformly coated with the coating solution 3, films can be formed on the two lens surfaces 1a and 1b at the same film thickness.

Coating step S2 includes coating solution coating step S2a of simultaneously coating the first lens surface 1a and second lens surface 1b of the spectacle lens substrate 1 with the coating solution 3, and spreading step S2b of subsequently spreading the coating solution 3 on the two lens surfaces 1a and 1b by the centrifugal force. Since coating of the first lens surface 1a with the coating solution 3 and coating of the second lens surface 1b with the coating solution 3 can be performed simultaneously, the coating solution 3 can be applied with high productivity.

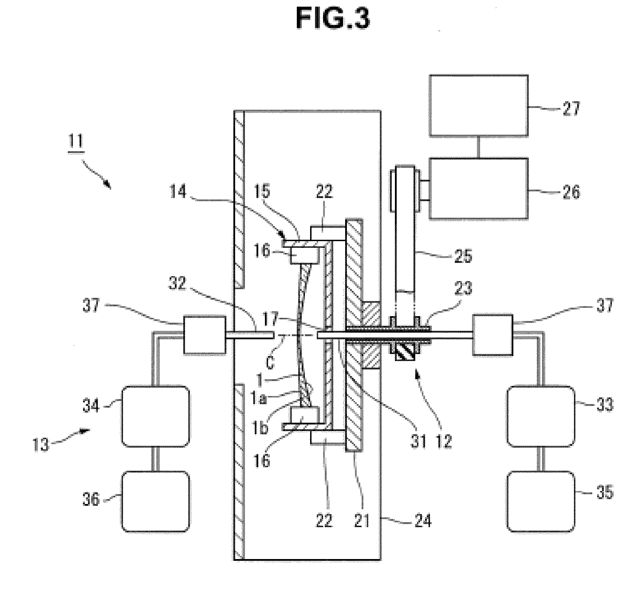

The above-described method for manufacturing a spectacle lens can be executed using a coating solution coating apparatus 11 for a spectacle lens substrate shown in Fig. 3.

The coating solution coating apparatus 11 includes a rotating unit 12 for rotating the spectacle lens substrate 1, and a coating unit 13 that injects the coating solution 3 toward the first lens surface 1a and second lens surface 1b of the spectacle lens substrate 1. The spectacle lens substrate 1 is mounted on the rotating unit 12 in a state in which it is held by a spectacle lens substrate holding member 14.

The spectacle lens substrate holding member 14 includes a cylindrical cup 15 with a bottom, and a plurality of pawls 16 provided on the inner circumferential surface of the cup 15. The cup 15 has a size enough to contain the spectacle lens substrate 1 inside it, and a size at which a wind generated when the cup 15 rotates at high speed does not have an adverse effect on coating with the coating solution 3. A through hole 17 is formed at the center of the bottom portion of the cup 15.

Although not shown in detail, each pawl 16 is formed from an elastic material such as a spring member, and projects from the inner circumferential surface of the cup 15 toward the shaft center. The distal end portion of the pawl 16 is pressed against the outer circumferential surface of the spectacle lens substrate 1.

The holding member 14 having this arrangement presses the outer circumferential surface of the spectacle lens substrate 1 by the plurality of pawls 16 toward the center, positions the spectacle lens substrate 1 on the same axis as that of the cup 15, and holds it.

The rotating unit 12 includes a rotating stage 21 that holds the cup 15 of the holding member 14. The rotating stage 21 uses a chuck mechanism 22 to sandwich the cup 15 from the outside in the radial direction and detachably holds it. The rotating stage 21 is rotatably supported by an apparatus housing 24 via a cylindrical rotating shaft 23 positioned on the same axis as the axis of the cup 15 (optical axis C of the spectacle lens substrate 1). A motor 26 is connected to the rotating shaft 23 via a transmission belt 25. The rotating shaft 23 and the rotating stage 21 connected to it are driven by the motor 26 to rotate at a predetermined rotational speed. The number of revolutions (or rotational speed) of the motor 26 is controlled by a rotation controller 27 connected to the motor 26.

An inner nozzle 31 constituting part of the coating unit 13 is inserted in the hollow portion of the rotating shaft 23. The coating unit 13 includes the inner nozzle 31, and an outer nozzle 32 arranged at a position where it faces the inner nozzle 31 via the spectacle lens substrate 1. The inner nozzle 31 is equivalent to the second nozzle 2b in Figs. 2A to 2D, and the outer nozzle 32 is equivalent to the first nozzle 2a in Figs. 2A to 2D.

The inner nozzle 31 horizontally injects a coating solution toward one lens surface (second lens surface 1b in Fig. 3) of the spectacle lens substrate 1. The inner nozzle 31 is supported by the apparatus housing 24 via a bracket (not shown) in a state in which the inner nozzle 31 extends through the shaft center portion of the rotating shaft 23 in the horizontal direction.

The distal end portion of the inner nozzle 31 extends in the horizontal direction, projects from the rotating shaft 23, passes through the through hole 17 of the cup 15, and is inserted in the cup 15. The distal end of the inner nozzle 31 is spaced apart by a predetermined distance from one lens surface (second lens surface 1b in Fig. 3) of the spectacle lens substrate 1 held by the holding member 14. A canister 33 (to be described later) is connected to the other end portion of the inner nozzle 31.

The outer nozzle 32 horizontally injects the coating solution 3 toward the other lens surface (first lens surface 1a in Fig. 3) of the spectacle lens substrate 1. The distal end portion of the outer nozzle 32 extends in the horizontal direction and is supported by the apparatus housing 24 via the bracket (not shown). The distal end of the outer nozzle 32 is spaced apart by a predetermined distance from the other lens surface of the spectacle lens substrate 1 held by the holding member 14. A canister 34 (to be described later) is connected to the other end portion of the outer nozzle 32.

The canisters 33 and 34 supply the coating solution 3 to the inner nozzle 31 and the outer nozzle 32, respectively. The coating solution 3 is stored in the canisters 33 and 34, squeezed out by gas pressures, and supplied to the inner nozzle 31 and the outer nozzle 32. The gas pressures are controlled by gas pressure controllers 35 and 36 connected to the canisters 33 and 34, respectively. By using the canisters 33 and 34 in coating with the coating solution 3, the injection pressure and injection amount (coating amount) of the coating solution 3 injected from the inner nozzle 31 and the outer nozzle 32 toward the spectacle lens substrate 1 can be controlled accurately.

Suck-back devices 37 are provided for the inner nozzle 31 and the outer nozzle 32. The suck-back devices 37 prevent exposure and drying of the coating solution 3 at the distal ends of the inner nozzle 31 and outer nozzle 32, and take an arrangement in which the pressures inside these nozzles are reduced after coating with the coating solution.

Note that the canisters 33 and 34, the gas pressure controllers 35 and 36, and the suck-back devices 37 constitute the above-described coating solution supply apparatus. The rotation controller 27 and the gas pressure controllers 35 and 36 constitute a control unit (controller) that controls injection of the coating solution 3 from the inner nozzle 31 and the outer nozzle 32, and rotation by the rotating unit 12.

To execute the above-described method for manufacturing a spectacle lens by using the coating solution coating apparatus 11 shown in Fig. 3, first, the spectacle lens substrate 1 is held by the rotating stage 21 via the holding member 14 in lens positioning step S1. In coating step S2, the coating solution 3 is injected simultaneously from the inner nozzle 31 and the outer nozzle 32, and the spectacle lens substrate 1 is driven by the motor 26 to rotate at the first rotational speed V1. After the coating solution 3 is spread on the entire first and second lens surfaces 1a and 1b, the rotation of the motor 26 is speeded up to rotate the spectacle lens substrate 1 at the second rotational speed V2 in high-speed rotation step S3.

Note that the operations in coating step S2 and high-speed rotation step S3 described above are implemented by control of the control unit. More specifically, the operation in coating solution coating step S2a is implemented by control of the gas pressure controllers 35 and 36 and the rotation controller 27. The operations in spreading step S2b and high-speed rotation step S3 are implemented by control of the rotation controller 27.

The coating solution coating apparatus 11 according to this embodiment can individually control rotation of the spectacle lens substrate 1, coating of the first lens surface 1a with the coating solution 3, and coating of the second lens surface 1b with the coating solution 3. This embodiment can therefore provide a coating solution coating apparatus capable of easily executing the above-mentioned coating method of simultaneously coating the first and second lens surfaces 1a and 1b with the coating solution 3.

### (Second Embodiment)

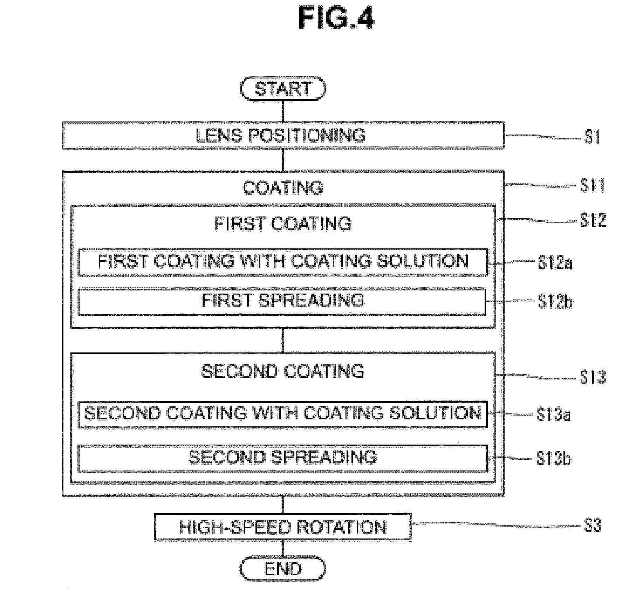

Next, a method for manufacturing a spectacle lens according to the second embodiment of the present invention will be described in detail with reference to Figs. 4 and 5A to 5F. In Figs. 4 and 5A to 5F, the same reference numerals as those in Figs. 1 to 3 denote the same parts, and a detailed description thereof will be properly omitted.

The method for manufacturing a spectacle lens according to this embodiment can be executed using a coating solution coating apparatus 11 for a spectacle lens substrate shown in Fig. 3. Even in this embodiment, a disc-like spectacle lens substrate 1 is processed in a state in which an optical axis C is oriented in the horizontal direction. Even in this embodiment, a thermoplastic coating solution, a thermosetting coating solution, an ultraviolet curing coating solution, and the like are available.

In the method for manufacturing a spectacle lens according to this embodiment, first, lens positioning step S1 of the flowchart shown in Fig. 4 is executed, and then coating step S11 is executed. In lens positioning step S1, the spectacle lens substrate 1 is arranged between a first nozzle 2a and a second nozzle 2b, as shown in Fig. 5A. The optical axis C of the spectacle lens substrate 1 is oriented in the horizontal direction.

Coating step S11 includes first coating step S12 of coating a first lens surface 1a with a coating solution 3, and second coating step S13 of coating a second lens surface 1b with the coating solution 3.

In first coating step S12, first, first coating solution coating step S12a is executed. In first coating solution coating step S12a, the coating solution 3 is injected at a predetermined pressure from the first nozzle 2a facing the first lens surface 1a, as shown in Fig. 5B. At this time, the spectacle lens substrate 1 is rotated at a predetermined rotational speed V0 about the optical axis C serving as the rotation center.

Although the number of revolutions of the spectacle lens substrate 1 at which the rotational speed V0 is obtained is 200 to 1,000 rpm even in this embodiment, the number of revolutions of the spectacle lens substrate 1 optimum for executing coating solution coating step S12a is 200 to 700 rpm.

The injection of the coating solution 3 is performed for, e.g., 1 to 10 sec. The coating solution 3 is adhered to the first lens surface 1a of the spectacle lens substrate 1.

Thereafter, first spreading step S12b is executed. Note that first spreading step S12b can be executed while injecting the coating solution 3 from the first nozzle 2a. As shown in Fig. 5C, first spreading step S12b is performed by rotating the spectacle lens substrate 1 at a first rotational speed V1 for a predetermined spreading time. The number of revolutions of the spectacle lens substrate 1 at which the first rotational speed V1 is obtained is 200 to 1,000 rpm, and the number of revolutions of the spectacle lens substrate 1 optimum for executing spreading step S12b is 200 to 700 rpm. The spreading time is 0 to 30 sec.

Then, the process advances to second coating step S13 to execute second coating solution coating step S13a. In second coating solution coating step S13a, the coating solution 3 is injected at a predetermined pressure from the second nozzle 2b facing the second lens surface 1b, as shown in Fig. 5D. At this time, the spectacle lens substrate 1 is rotated at the predetermined rotational speed V0 about the optical axis C serving as the rotation center.

The injection of the coating solution 3 is performed for, e.g., 1 to 10 sec. The coating solution 3 is adhered to the second lens surface 1b of the spectacle lens substrate 1.

After that, second spreading step S13b is executed. Note that second spreading step S13b can be executed while injecting the coating solution 3 from the second nozzle 2b. As shown in Fig. 5E, second spreading step S13b is performed by rotating the spectacle lens substrate 1 at the first rotational speed V1 for a predetermined spreading time. The spreading time is 0 to 30 sec.

By executing first coating step S12 and second coating step S13 in this manner, the coating solution 3 is spread on the entire two lens surfaces 1a and 1b of the spectacle lens substrate 1. High-speed rotation step S3 is then executed.

In high-speed rotation step S3, the spectacle lens substrate 1 is rotated at a second rotational speed V2, as shown in Fig. 5F. The number of revolutions of the spectacle lens substrate 1 at which the second rotational speed V2 is obtained is, e.g., about 1,000 to 3,000 rpm. High-speed rotation step S3 is executed for 5 to 30 sec. Note that the second rotational speed V2 is not limited to 1,000 to 3,000 rpm, and can be, e.g., about 6,000 rpm when a coating solution coating apparatus capable of high-speed rotation is used.

As described in this embodiment, even by the method of coating the first lens surface 1a of the spectacle lens substrate 1 with the coating solution 3, spreading the coating solution 3, then coating the second lens surface 1b with the coating solution 3, and spreading the coating solution 3, the same effects as those obtained when the method according to the above-described first embodiment is adopted can be obtained. Note that the same results are obtained even when a method of coating the second lens surface 1b first with the coating solution 3, spreading the coating solution 3, then coating the first lens surface 1a with the coating solution 3 is employed.

Note that the operations in coating step S11 and high-speed rotation step S3 described above are implemented by control of the aforementioned control unit. More specifically, the operations in coating solution coating step S12a and coating solution coating step S13a are implemented by control of gas pressure controllers 35 and 36 and a rotation controller 27. The operations in spreading step S12b, spreading step S13b, and high-speed rotation step S3 are implemented by control of the rotation controller 27.

### (Modification)

In the above-described embodiment, the respective lens surfaces 1a and 1b are coated with the coating solution 3 by using the first nozzle 2a facing the first lens surface 1a of the spectacle lens substrate 1, and the second nozzle 2b facing the second lens surface 1b. In the present invention, however, it is important to apply the coating solution 3 in a state in which the spectacle lens substrate 1 is arranged so that the optical axis C is oriented in the horizontal direction, and the two nozzles 2a and 2b need not always be used. For example, it is also possible to coat the first lens surface 1a of the spectacle lens substrate 1 with the coating solution 3 from the nozzle 2a, then turn over the spectacle lens substrate 1, and coat the second lens surface 1b of the spectacle lens substrate 1 with the coating solution 3 again from the nozzle 2a. Hence, the coating solution coating apparatus 11 for a spectacle lens substrate shown in Fig. 3 suffices to have at least either an inner nozzle 31 or an outer nozzle 32.

### (Experimental Results)

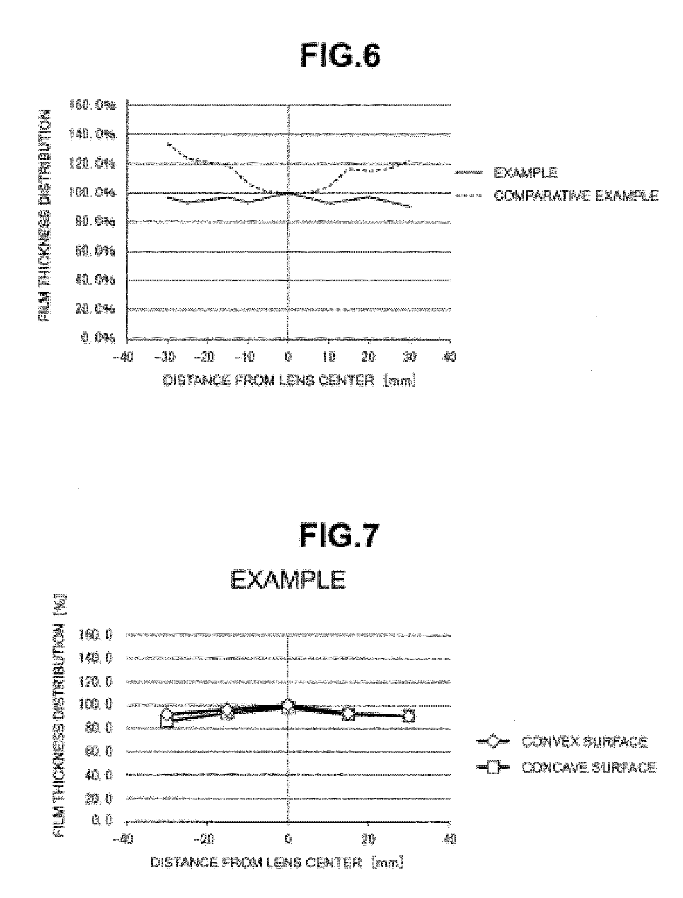

Experimental results regarding the above-described method for manufacturing a spectacle lens will be explained. A film was formed on the lens surface of a spectacle lens by using the method according to the first embodiment. In Fig. 6, a solid line indicates a film thickness distribution on one lens surface. For comparison, a broken line indicates the film thickness distribution of a film formed by the method disclosed in patent literature 1. The difference between the case in which the method according to the first embodiment is executed and the case in which the method disclosed in patent literature 1 is executed is only the direction in which the optical axis of the spectacle lens substrate 1 is oriented. The film thickness shown in Fig. 6 is drawn by defining a film thickness at the center of the spectacle lens substrate 1 as 100%.

As is apparent from Fig. 6, the film thickness can be uniformed by executing the method according to the first embodiment, compared to the case in which the method disclosed in patent literature 1 is employed. The reason will be examined.

In the method disclosed in patent literature 1, the lens surface is coated with the coating solution from above the lens surface while rotating the spectacle lens substrate in a state in which its lens surfaces are oriented up and down. When the upper surface is a convex surface, the coating solution readily runs toward the periphery of the lens surface under the influence of gravity. In addition, a centrifugal force generated by rotation acts, and the film thickness difference between the center and periphery of the lens surface stands out.

To the contrary, in the method according to the first embodiment, the lens surface is coated with the coating solution 3 from the horizontal direction while rotating the spectacle lens substrate 1 in a state in which its lens surfaces are oriented in the horizontal direction. When a point A on the lens surface exists at a lower position with respect to the center of the lens surface, a force toward the periphery of the lens surface acts on the coating solution 3 at the point A because of gravity. Then, when the spectacle lens substrate 1 rotates by 180° and the point A comes to an upper position with respect to the center of the lens surface, a force toward the center of the lens surface acts on the coating solution 3 at the point A because of gravity. In this manner, the influence of gravity acting on the coating solution 3 is canceled by rotation of the spectacle lens substrate 1. It is therefore considered that the film thickness distribution on the lens surface can be uniformed by the method according to the first embodiment much more than by the method disclosed in patent literature 1.

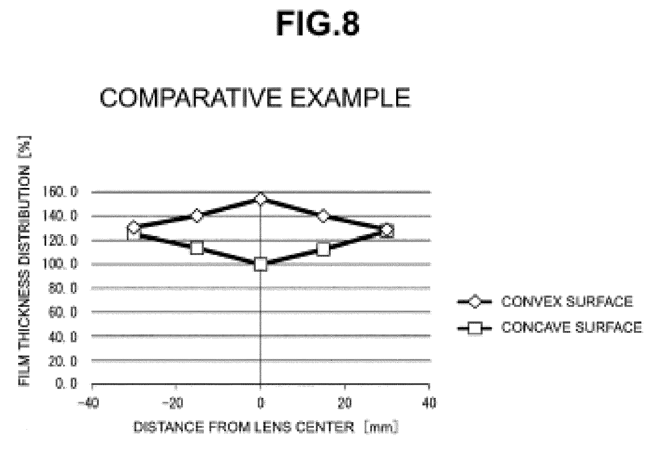

Although Fig. 6 shows only the film thickness distribution on one lens surface, the same results as those of one lens surface were obtained even for the other lens surface. Fig. 7 shows a film thickness distribution on one lens surface (convex surface), and a film thickness distribution on the other lens surface (concave surface). For comparison, Fig. 8 shows the film thickness distributions of films formed on two surfaces by the method disclosed in patent literature 1.

In the method disclosed in patent literature 1, when coating a spectacle lens substrate with the coating solution, the two lens surfaces serve as the upper and lower surfaces of the spectacle lens substrate, so the influence of gravity acting on the coating solution greatly differs between the two lens surfaces.

To the contrary, in the method according to the first embodiment, when coating the spectacle lens substrate 1 with the coating solution 3, the two lens surfaces serve as the side surfaces of the spectacle lens substrate, and the influence of gravity acting on the coating solution becomes equal between the two lens surfaces. Since the two lens surfaces can be uniformly coated with the coating solution 3, films can be formed on the two lens surfaces at the same film thickness.

Although the experimental results regarding the first embodiment have been described above, the same results as those in the first embodiment were obtained even by the method according to the second embodiment.

### Explanation of the Reference Numerals and Signs

1... spectacle lens substrate, 1a...first lens surface, 1b...second lens surface, 2a...first nozzle, 2b...second nozzle, 3...coating solution, 11...coating solution coating apparatus for spectacle lens substrate, 12...rotating unit, 13...coating unit, 31...inner nozzle, 32...outer nozzle, S2, S11...coating step, S12...firs coating step, S13...second coating step, S3...high-speed rotation step, C...optical axis

## Claims

1. A method for manufacturing a spectacle lens, comprising the steps of:
coating, with a coating solution, a lens surface of a spectacle lens substrate arranged to orient an optical axis in a horizontal direction by injecting the coating solution from a nozzle in the horizontal direction;
spreading the coating solution on the lens surface by a centrifugal force by rotating the spectacle lens substrate at a first rotational speed about the optical axis serving as a rotation center; and
blowing away an excess of the coating solution from the spectacle lens substrate by a centrifugal force by rotating the spectacle lens substrate, on which the coating solution is spread, at a second rotational speed higher than the first rotational speed.

2. The method for manufacturing a spectacle lens according to claim 1, wherein
the step of coating includes the step of injecting the coating solution in the horizontal direction from a first nozzle and second nozzle respectively facing a first lens surface and second lens surface of the spectacle lens substrate to simultaneously coat the first lens surface and the second lens surface with the coating solution, and
the step of spreading includes the step of rotating the spectacle lens substrate at the first rotational speed after simultaneously coating the first lens surface and the second lens surface with the coating solution.

3. The method for manufacturing a spectacle lens according to claim 1, wherein
the step of coating includes the step of injecting the coating solution in the horizontal direction from a first nozzle facing a first lens surface of the spectacle lens substrate to coat the first lens surface with the coating solution,
the step of spreading includes the step of rotating the spectacle lens substrate at the first rotational speed to spread the coating solution on the first lens surface,
the step of coating further includes the step of injecting the coating solution in the horizontal direction from a second nozzle facing a second lens surface of the spectacle lens substrate to coat the second lens surface with the coating solution after spreading the coating solution on the first lens surface, and
the step of spreading further includes the step of rotating the spectacle lens substrate at the first rotational speed to spread the coating solution on the second lens surface.

4. A coating solution coating apparatus for a spectacle lens substrate, comprising:
a rotating unit that rotates a spectacle lens substrate about an optical axis serving as a rotation center in a state in which the spectacle lens substrate is held to orient the optical axis in a horizontal direction; and
a first nozzle that faces a first lens surface of the spectacle lens substrate and injects a coating solution in the horizontal direction toward the first lens surface.

5. The coating solution coating apparatus for a spectacle lens substrate according to claim 4, further comprising a second nozzle that faces a second lens surface of the spectacle lens substrate and injects the coating solution in the horizontal direction toward the second lens surface.

6. The coating solution coating apparatus for a spectacle lens substrate according to claim 5, wherein said second nozzle is provided to extend through a shaft center portion of said rotating unit in the horizontal direction.

7. The coating solution coating apparatus for a spectacle lens substrate according to claim 6, further comprising a holding member that holds the spectacle lens substrate,
wherein said rotating unit includes:
a rotating stage that holds said holding member to orient, in the horizontal direction, the optical axis of the spectacle lens substrate held by said holding member; and
a cylindrical rotating shaft that is connected to the rotating stage and is disposed on the same axis as the optical axis, and
said second nozzle is inserted in the rotating shaft.

8. The coating solution coating apparatus for a spectacle lens substrate according to claim 5, further comprising a control unit that controls injection of the coating solution from said first nozzle and said second nozzle, and rotation by said rotating unit.
